# EUROPÄISCHE PATENTANMELDUNG

(11) **EP 0 775 714 A2**
(43) Veröffentlichungstag der Anmeldung: **28.05.1997**
(21) Anmeldenummer: 96118090.8
(22) Anmeldetag: 12.11.1996
(51) Int. Cl.: C08F 210/06, C08F 2/00, C08F 2/34, C08F 4/658

(54) **Copolymerisate des Propylens**

(30) Priorität: 21.11.1995 DE 19543293
(71) Anmelder: BASF AKTIENGESELLSCHAFT, 67056 Ludwigshafen (DE)
(72) Erfinder: Kersting, Meinolf, Dr., 67435 Neustadt (DE); Müller, Patrik, Dr., 67661 Kaiserslautern (DE); Werner, Rainer Alexander, Dr., 67098 Bad Dürkheim (DE); Zolk, Ralf, Dr., 67256 Weisenheim (DE); Scherer, Günter, Dr., 67435 Neustadt (DE)

(57) **Zusammenfassung**

Copolymerisate des Propylens mit Alk-1-enen, erhältlich durch zweistufige Polymerisation aus der Gasphase heraus in einem bewegten Festbett, mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, wobei man
a) in der ersten Polymerisationsstufe bei einem Druck von 15 bis 40 bar, einer Temperatur von 50 bis 100°C und einer mittleren Verweilzeit des Reaktionsgemisches von 0,5 bis 5 Stunden, Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1 einstellt und anschließend
b) in einer zweiten Polymerisationsstufe bei einem Druck von 5 bis 40 bar, wobei dieser Druck wenigstens 3 bar unter dem Druck der ersten Polymerisationsstufe liegt, einer Temperatur von 30 bis 100°C und einer mittleren Verweilzeit des Reaktionsgemisches von 0,5 bis 5 Stunden, dem aus der ersten Polymerisationsstufe ausgebrachten Polymerisat Propylen und weiteres Alk-1-en in Anwesenheit von Wasserstoff hinzupolymerisiert, dabei das Verhältnis der Partialdrücke zwischen Propylen und dem des weiteren Alk-1-ens auf 0,5:1 bis 20:1 und das Gewichtsverhältnis zwischen den in der ersten und den in der zweiten Polymerisationsstufe umgesetzten Monomeren auf 0,5:1 bis 20:1 einstellt, und als siliciumorganische Verbindung eine solche der allgemeinen Formel (II) verwendet,

   R¹ₙSi(OR²)₄₋ₙ (II)

   wobei
   R¹ eine 3- bis 8-gliedrige Cycloalkylgruppe,
   R² eine C₁-C₈-Alkylgruppe bedeutet und
   n für die Zahlen 1, 2 oder steht.

## Beschreibung

Die vorliegende Erfindung betrifft Copolymerisate des Propylens mit Alk-1-enen, erhältlich durch zweistufige Polymerisation aus der Gasphase heraus in einem bewegten Festbett, mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, wobei man
a) in der ersten Polymerisationsstufe bei einem Druck von 15 bis 40 bar, einer Temperatur 50 bis 100°C und einer mittleren Verweilzeit des Reaktionsgemisches von 0,5 bis 5 Stunden, Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1 einstellt und anschließend
b) in einer zweiten Polymerisationsstufe bei einem Druck von 5 bis 40 bar, wobei dieser Druck wenigstens 3 bar unter dem Druck der ersten Polymerisationsstufe liegt, einer Temperatur von 30 bis 100°C und einer mittleren Verweilzeit des Reaktionsgemisches von 0,5 bis 5 Stunden, dem aus der ersten Polymerisationsstufe ausgebrachten Polymerisat Propylen und weiteres Alk-1-en in Anwesenheit von Wasserstoff hinzupolymerisiert, dabei das Verhältnis der Partialdrücke zwischen Propylen und dem des weiteren Alk-1-ens auf 0,5:1 bis 20:1 und das Gewichtsverhältnis zwischen den in der ersten und den in der zweiten Polymerisationsstufe umgesetzten Monomeren auf 0,5:1 bis 20:1 einstellt, und als siliciumorganische Verbindung eine solche der allgemeinen Formel (II) verwendet,

   R¹ₙSi(OR²)₄₋ₙ (II)

   wobei
   R¹ eine 3- bis 8-gliedrige Cycloalkylgruppe,
   R² eine C₁-C₈-Alkylgruppe bedeutet und
   n für die Zahlen 1, 2 oder steht.

Weiterhin betrifft die vorliegende Erfindung ein Verfahren zur Herstellung dieser Copolymerisate sowie Folien, Fasern und Formkörper aus diesen Copolymerisaten.

Durch Polymerisation an Ziegler-Natta-Katalysatoren erhältliche Propylen-Ethylen-Copolymerisate sind bereits in zahlreichen Patentschriften beschrieben worden. Aus der US-A 4 260 710 ist bekannt, Homo- und Copolymerisate von Alk-1-enen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, US-A 857 613, EP-A 171 200).

Des weiteren sind eine Reihe von Verfahren zur Darstellung von Propylen-Ethylen-Blockcopolymeren mit Hilfe eines Ziegler-Natta-Katalysatorsystems bekannt (US-A 4 454 299, USA 4 455 405, ZA-B 0084/3561, ZA-B 0084/3563, ZA-B 0084/5261, GB-B 1 032 945, DE-A 38 27 565), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine gute Schlagzähigkeit und Steifigkeit auf.

In der DE-A 4 004 087 wird die Herstellung eines Copolymerisats des Propylens beschrieben, wobei zunächst in einer ersten Polymerisationsstufe Propylen zusammen mit einem weiteren Alk-1-en polymerisiert wird und anschließend in einer zweiten Polymerisationsstufe dem aus der ersten Polymerisationsstufe erhaltenen Polymerisat ein Gemisch aus Propylen und einem weiteren Alk-1-en hinzupolymerisiert wird. Das dabei verwendete Verfahren wird in der Gasphase und in Anwesenheit eines Ziegler-Natta-Katalysatorsystems durchgeführt und zeichnet sich durch eine hohe Produktivität aus. Die daraus erhaltenen Copolymerisate des Propylens sind u.a. durch eine gute Kerbschlagzähigkeit, eine gute Steifigkeit und niedrige Anteile an xylollöslichen Bestandteilen charakterisiert.

Für einige Anwendungsgebiete von Kunststoffen ist es aber notwendig, den Anteil an xylollöslichen Bestandteilen im Copolymerisat nochmals weiter abzusenken, so daß diese auch als Verpackungsmaterial im Lebensmittelbereich verwendet werden können. Darüber hinaus ist man auch aus wirtschaftlichen Gründen an einer weiteren Steigerung der Produktivität des eingesetzten Katalysatorsystems interessiert.

Der vorliegenden Erfindung lag daher die Aufgabe zugrunde, den geschilderten Nachteilen abzuhelfen und Copolymerisate des Propylens mit reduzierten xylollöslichen Anteilen zu entwickeln, die darüber hinaus nach einem Verfahren mit einer gesteigerten Produktivität hergestellt werden können.

Demgemäß werden die eingangs definierten neuen Copolymerisate des Propylens gefunden.

Das zu diesen Copolymerisaten führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei neben einer Aluminiumkomponente noch eine siliciumorganische Verbindung als weitere Elektronendonorkomponente in Betracht.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate und Aluminiumphosphat gut bewährt haben. Als besonders bevorzugter Träger wird SiO₂.aAl₂O₃ verwendet, wobei a für einen Wert von 0 bis 2, insbesondere von 0 bis 0,5 steht. Die als Träger verwendeten Stoffe können bis zu 10 Gew.-% Wasser enthalten.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone sowie phosphor- und siliciumorganische Verbindungen. Bevorzugt werden als Elektronendonorverbindungen innerhalb der titanhaltigen Feststoffkomponente phthalsäurederivate der allgemeinen Formel I 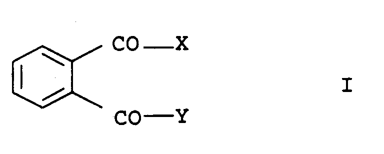 verwendete wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der US-A 857 613, der GB-A 2 111 066 und der US-A 5 288 824 beschrieben.

Bei der Herstellung der titanhaltigen Feststoffkomponente wird bevorzugt folgendes mehrstufige Verfahren angewandt.

In der ersten Stufe versetzt man zunächst einen feinteiligen Träger, bevorzugt Siliciumoxid oder SiO₂.aAl₂O₃ - wobei a für eine Zahl im Bereich von 0,01 und 2, insbesondere im Bereich von 0,01 und 0,5 steht -, mit einer Lösung einer magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, ein. Danach fügt man ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Die Lösung wird mindestens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel mindestens 5 Gew.-% Titantetrachlorid enthält. Danach wäscht man das Produkt solange mit einem flüssigen Alkan, bis der Gehalt der Waschflüssigkeit an Titantetrachlorid geringer ist als 2 Gew.-%.

Als Aluminiumkomponente kommen neben Trialkylaluminium auch solche Verbindungen in Betracht, bei denen ein Alkylsubstituent durch eine Alkoxygruppe oder durch ein Halogen, wie Chlor oder Brom, ersetzt ist. Bevorzugt werden Trialkylaluminiumverbindungen verwendet, deren Substituenten jeweils 1 bis 8 C-Atome aufweisen, beispielsweise Trimethyl-, Triethyl- oder Methyldiethylaluminium.

Neben der titanhaltigen Feststoffkomponente und der Aluminiumkomponente enthält das zur Herstellung der erfindungsgemäßen Copolymerisate des Propylens verwendete Ziegler-Natta-Katalysatorsystem noch eine siliciumorganische Verbindung als weitere Elektronendonorkomponente. Dabei handelt es sich um eine siliciumorganische Verbindung der allgemeinen Formel II

R¹ₙSi(OR²)₄₋ₙ (II)

wobei
R¹ eine 3- bis 8-gliedrige Cycloalkylgruppe,
R² eine C₁-C₈-Alkylgruppe bedeutet und
n für die Zahlen 1, 2 oder 3 steht.

Bevorzugt sind dabei solche siliciumorganischen Verbindungen der allgemeinen Formel (II), wobei
R¹ eine 5- bis 7-gliedrige Cycloalkylgruppe,
R² eine C₁-C₄-Alkylgruppe bedeutet und
n für die Zahl 2 steht.

Unter diesen Verbindungen sind insbesondere Dimethoxydicyclopentylsilan, Diethoxydicyclopentylsilan, Diisopropyloxydicyclopentylsilan, Diisobutyloxydicyclopentylsilan und Dimethoxydicyclohexylsilan hervorzuheben. Ganz besonders bevorzugt ist Dimethoxydicyclopentylsilan. Wie alle anderen eingesetzten Katalysatorbestandteile sind auch diese siliciumorganischen Verbindungen der allgemeinen Formel (II) im Fachhandel erhältlich.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Die Polymerisation wird in der ersten Polymerisationsstufe bei einem Druck von 15 und 40 bar, einer Temperatur von 50 bis 100°C und einer mittleren Verweilzeit des Reaktionsgemisches von 0,5 bis 5 Stunden durchgeführt. Bevorzugt sind dabei Drücke von 20 bis 35 bar, Temperaturen von 60 bis 90°C und mittlere Verweilzeiten von 1,0 bis 3,0 Stunden. Bevorzugt wählt man die Reaktionsbedingungen so, daß in der ersten Polymerisationsstufe pro mol der Aluminiumkomponente 0,05 bis 2 kg, bevorzugt 0,1 bis 1,5 kg, eines Propylen-Copolymerisats bzw. Homopolymerisats gebildet werden. Als Comonomer wird dabei ein Alk-1-en verwendet, beispielsweise Ethylen, But-1-en, Pent-1-en, Hex-1-en, Hept-1-en oder Oct-1-en oder ein Gemisch aus mehreren Alk-1-enen. Bevorzugte Comonomere sind Ethylen und But-1-en. In der ersten Polymerisationsstufe wird das Verhältnis zwischen dem Partialdruck des Propylens und dem des Alk-1-ens üblicherweise auf 10:1 bis 500:1, insbesondere auf 15:1 bis 200:1, eingestellt. Wird in der ersten Polymerisationsstufe ein Comonomerengemisch aus Propylen, Ethylen und einem C₄-C₁₀-Alk-1-en verwendet, so sollte das Verhältnis der Partialdrücke zwischen Ethylen und dem C₄-C₁₀-Alk-1-en auf 20:1 bis 1:10, insbesondere auf 10:1 bis 1:5 eingestellt werden. Die Polymerisation wird dabei in Anwesenheit von Wasserstoff durchgeführt, wobei vorzugsweise ein Partialdruckverhältnis zwischen Propylen und Wasserstoff von 30:1 bis 180:1, insbesondere von 30:1 bis 150:1 eingestellt wird.

Als Alk-1-en kann in der ersten Polymerisationsstufe auch Propylen eingesetzt werden, was in diesem ebenfalls bevorzugten Fall zu einer Homopolymerisation des Propylens führt.

Das hierbei erhältliche Copolymerisat bzw. Homopolymerisat des Propylens wird nach Beendigung der Reaktion zusammen mit dem Katalysator aus der ersten Polymerisationsstufe ausgetragen und in die zweite Polymerisationsstufe eingeführt, wo diesem ein Gemisch von Propylen und weiteren Alk-1-enen hinzupolymerisiert wird.

Darunter werden neben Ethylen und But-1-en insbesondere noch Pent-1-en, Hex-1-en, Hept-1-en und Oct-1-en verstanden, wobei Ethylen und But-1-en bevorzugt verwendet werden. Dabei kann das Propylen sowohl mit einem Alk-1-en als auch mit einem Gemisch aus Ethylen und einem C₄-C₁₀-Alk-1-en dem aus der ersten Polymerisationsstufe ausgebrachten Copolymerisat hinzupolymerisiert werden. Vorzugsweise wird in der zweiten Polymerisationsstufe entweder ein Gemisch aus Propylen und Ethylen oder ein Gemisch aus Propylen, Ethylen und But-1-en umgesetzt. Die Menge der jeweils eingesetzten Monomere ist dabei so zu bemessen, daß das Verhältnis der Partialdrücke zwischen Propylen und den weiteren Alk-1-enen im Bereich von 0,5:1 bis 20:1, insbesondere im Bereich von 1,0:1 bis 10:1, liegt. Für den Fall, daß in der zweiten Polymerisationsstufe ein Gemisch aus Propylen, Ethylen und einem C₄-C₁₀-Alk-1-en copolymerisiert wird, ist ferner dafür zu sorgen, daß das Verhältnis der Partialdrücke zwischen Ethylen und dem C₄-C₁₀-Alk-1-en auf 2:1 bis 100:1, insbesondere auf 5:1 bis 50:1 eingestellt wird. Durch geeignete Wahl der Reaktionsparameter sollte außerdem darauf geachtet werden, daß das Gewichtsverhältnis zwischen den in der ersten und den in der zweiten Polymerisationsstufe umgesetzten Monomere im Bereich von 0,5:1 bis 20:1, insbesondere im Bereich von 1,0:1 bis 15:1, liegt.

Die Polymerisation erfolgt in der zweiten Polymerisationsstufe bei einem Druck von 5 bis 40 bar, einer Temperatur von 30 bis 100°C und einer mittleren Verweilzeit des Reaktionsgemisches von 0,5 bis 5 Stunden. Bevorzugt sind dabei Drücke von 10 bis 35 bar, Temperaturen von 50 bis 90°C und mittlere Verweilzeiten von 1,0 bis 3,0 Stunden. Dabei sollte der Druck in der zweiten Polymerisationsstufe wenigstens 3 bar unter dem Druck der ersten Polymerisationsstufe liegen. Die Polymerisation erfolgt auch in der zweiten Polymerisationsstufe vorzugsweise in Anwesenheit von Wasserstoff, wobei bei einem Partialdruckverhältnis zwischen Propylen und Wasserstoff von 100:1 bis 5:1, insbesondere von 60:1 bis 10:1 gearbeitet wird.

Weiterhin kann es sich empfehlen, dem Reaktionsgemisch der zweiten Polymerisationsstufe ein C₁- bis C₈-Alkanol, insbesondere ein C₁-C₄-Alkanol, hinzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des C₁-C₈-Alkanols wird dabei zweckmäßigerweise so bemessen, daß das Molverhältnis zwischen dem C₁-C₈-Alkanol und der als Cokatalysator dienenden Aluminiumverbindung 0,01:1 bis 10:1, insbesondere 0,02:1 bis 5:1, beträgt.

Die mittleren Molmassen der dabei erhältlichen erfindungsgemäßen Copolymerisate des Propylens liegen zwischen 10 000 bis 1 000 000, die Schmelzflußindices zwischen 0,1 bis 100 g/10 min, vorzugsweise zwischen 0,2 bis 20 g/10 min, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird.

Bei den erfindungsgemäßen Copolymerisaten des Propylens handelt es sich dabei sowohl um Copolymerisate aus einem Homopolymerisat und einem Copolymerisat des Propylens als auch um Copolymerisate aus zwei verschiedenen Copolymerisaten des Propylens.

Die erhaltenen Copolymerisate des Propylens weisen u.a. neben einer sehr guten Kerbschlagzähigkeit und verringerten xylollöslichen Anteilen noch eine hohe Steifigkeit auf. Das ebenfalls erfindungsgemäße Verfahren zur Herstellung dieser Copolymerisate zeichnet sich u.a. durch eine hohe Produktivität aus.

Die erfindungsgemäßen Copolymerisate des Propylens können darüber hinaus noch übliche Additive wie beispielsweise Nukleierungsmittel, Stabilisatoren, Gleitmittel, Antioxidantien, Wärmestabilisatoren, UV-Stabilisatoren und Verarbeitungshilfsmittel enthalten.

Für den Fall, daß in den erfindungsgemäßen Copolymerisaten des Propylens noch Nukleierungsmittel vorliegen, ist es vorteilhaft, wenn pro 100 Gew.-Teile des Copolymerisats des Propylens 0,01 bis 1,5 Gew.-Teile des Nukleierungsmittels eingesetzt werden. Als Nukleierungsmittel kann man dabei u.a. feinteiliges Talkum, Dibenzylidensorbitol und dessen C₁-C₈-alkylsubstituierte Derivate oder auch Salze von Diestern der Phosphorsäure verwenden.

Aufgrund ihrer guten mechanischen Eigenschaften eignen sich die erfindungsgemäßen Copolymerisate des Propylens u.a. zur Herstellung von Folien, Rohren, Belägen, Fasern, Hohlkörpern, Spritzgußartikeln und von Formkörpern.

### Beispiele

In allen Beispielen 1 bis 6 sowie in den Vergleichsbeispielen A bis F erfolgte die Herstellung der Copolymerisate des Propylens in zwei hintereinander geschalteten Rührautoklaven mit einem Nutzvolumen von jeweils 180 l in Anwesenheit von Wasserstoff als Molmassenregler. Beide Reaktoren enthielten ein bewegtes Festbett aus feinteiligem Polypropylen.

### Vergleichsbeispiel A

In den ersten Polymerisationsreaktor wurden bei einem Druck von 30 bar und einer Temperatur von 80°C flüssiges Propylen in den Reaktor hineinentspannt und dieses kontinuierlich mit Hilfe eines Ziegler-Natta-Katalysators polymerisiert. Dabei wurden pro Stunde 2,2 g einer titanhaltigen Feststoffkomponente 90 mmol Triethylaluminium und 9 mmol Dimethoxyisobutylisopropylsilan als Katalysatorbestandteile verwendet. Die mittlere Verweilzeit des Reaktionsgemisches betrug 1,5 Stunden. Bei diesem Verfahren wurden pro mmol der Aluminiumverbindung 0,4 kg Polypropylen erzeugt.

Die titanhaltige Feststoffkomponente wurde nach folgendem Verfahren hergestellt.

Dazu versetzte man in einer ersten Stufe SiO₂, welches einen Teilchendurchmesser von 20 bis 45 µm, ein Porenvolumen von 1,75 cm³/g und eine Oberfläche von 320 m²/g aufwies, mit in n-Heptan gelöstem Butyl-octyl-magnesium, wobei pro Mol SiO₂ 0,3 mol der Magnesiumverbindung eingesetzt wurden. Die Lösung wurde 1,5 Stunden lang bei 90°C gerührt, danach auf 20°C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurden unter ständigem Rühren 3 mol Ethanol, bezogen auf 1 mol Magnesium hinzugefügt. Dieses Gemisch wurde 1,5 Stunden bei 80°C gerührt und danach mit 6 mol Titantetrachlorid und 0,5 mol Phthalsäure-di-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125°C mit einer 15 gew.-%igen Lösung von Titantetrachlorid in Ethylbenzol.

Danach wurde das Festprodukt durch Filtration vom Extraktionsmittel getrennt und solange mit n-Heptan gewaschen, bis dieses nur mehr 0,3 Gew.-% Titantetrachlorid erhielt.

Die darauf resultierende titanhaltige Feststoffkomponente enthielt 3,1 Gew.-% Titan, 7,5 Gew.-% Magnesium und 28,3 Gew.-% Chlor.

Das im ersten Reaktor gebildete Propylenhomopolymerisat wurde zusammen mit dem Katalysator in den zweiten Reaktor überführt und dort dem Polymerisat bei einem Gesamtdruck von 20 bar, einer Temperatur von 70°C und in Anwesenheit von 180 mmol Isopropanol ein Gemisch von Propylen und Ethylen hinzupolymerisiert. Das Verhältnis der Partialdrücke zwischen Propylen und Ethylen betrug dabei 1,8. Das Gewichtsverhältnis zwischen dem im ersten Reaktor gebildeten Polypropylen und dem im zweiten Reaktor entstandenen Copolymerisat lag bei 8,6. Bei der Polymerisation wurden im zweiten Reaktor pro mmol der Aluminiumkomponente 2,0 mmol Isopropanol verwendet. Die gesamten Reaktionsparameter können der nachfolgenden Tabelle 1 entnommen werden.

Dabei erhielt man ein Propylen-Ethylen-Copolymerisat mit einem Schmelzflußindex (HLMI) von 15,0 g/10 min., bei 230°C und 21,6 kg (nach DIN 53 735). Die Eigenschaften der dabei erhaltenen Propylen-Ethylen-Copolymerisate sind in der nachfolgenden Tabelle 2 aufgeführt.

### Beispiel 1

Analog dem Vergleichsbeispiel A wurde ein Propylen-Ethylen-Copolymerisat hergestellt, wobei aber anstelle von 9 mmol Dimethoxyisobutylisopropylsilan 9 mmol Dimethoxydicyclopentylsilan verwendet werden. Die gesamten Reaktionsparameter können der nachfolgenden Tabelle 1 entnommen werden.

Dabei erhielt man ein Propylen-Ethylen-Copolymerisat mit einem Schmelzflußindex (HLMI) von 14,8 g/min, bei 230°C und 21,6 kg (nach DIN 53 735). Die Eigenschaften der dabei erhaltenen erfindungsgemäßen Propylen-Ethylen-Copolymerisate sind in der nachfolgenden Tabelle 2 aufgeführt.

### Vergleichsbeispiel B

Es wurde entsprechend den in der Tabelle 1 aufgeführten Reaktionsbedingungen ein Propylen-Ethylen-Copolymerisat mit Hilfe eines Ziegler-Natta-Katalsysatorsystems hergestellt, welches 9 mmol Dimethoxyisobutylisopropoylsilan enthielt.

Die Eigenschaften der dabei erhaltenen Propylen-Ethylen-Copolymerisate sind in der nachfolgenden Tabelle 2 aufgeführt.

### Beispiel 2

Analog dem Vergleichsbeispiel B wurde ein Propylen-Ethylen-Copolymerisat hergestellt, wobei aber anstelle von 9 mmol Dimethoxyisobutylisopropylsilan 9 mmol Dimethoxydicyclopentylsilan verwendet wurden. Die gesamten Reaktionspartner können der nachfolgenden Tabelle 1 entnommen werden.

Die Eigenschaften der erhaltenen erfindungsgemäßen Propylen-Ethylen-Copolymerisate sind in der nachfolgenden Tabelle 2 aufgeführt.

### Vergleichsbeispiel C

Es wurde entsprechend den in der Tabelle 1 aufgeführten Reaktionsbedingungen ein Propylen-Ethylen-Copolymerisat mit Hilfe eines Ziegler-Natta-Katalsysatorsystems hergestellt, welches 6 mmol Dimethoxyisobutylisopropylsilan enthielt.

Die Eigenschaften der dabei erhaltenen Propylen-Ethylen-Copolymerisate sind in der nachfolgenden Tabelle 2 aufgeführt.

### Beispiel 3

Analog dem Vergleichsbeispiel C wurde ein Propylen-Ethylen-Copolymerisat hergestellt, wobei aber anstelle von 6 mmol Dimethoxyisobutylisopropylsilan 6 mmol Dimethoxydicyclopentylsilan verwendet wurden. Die gesamten Reaktionspartner können der nachfolgenden Tabelle 1 entnommen werden.

Die Eigenschaften der erhaltenen erfindungsgemäßen Propylen-Ethylen-Copolymerisate sind in der nachfolgenden Tabelle 2 aufgeführt.

### Vergleichsbeispiel D

Es wurde entsprechend den in der Tabelle 1 aufgeführten Reaktionsbedingungen ein Propylen-Ethylen-Copolymerisat mit Hilfe eines Ziegler-Natta-Katalysatorsystems hergestellt, wobei 6 mmol Dimethoxyisobutylisopropylsilan enthielt.

Die Eigenschaften der dabei erhaltenen Propylen-Ethylen-Copolymerisate sind in der nachfolgenden Tabelle 2 aufgeführt.

### Beispiel 4

Analog dem Vergleichsbeispiel D wurde ein Propylen-Ethylen-Copolymerisat hergestellt, wobei aber anstelle von 6 mmol Dimethoxyisobutylisopropylsilan 6 mmol Dimethoxydicyclopentylsilan verwendet wurden. Die gesamten Reaktionspartner können der nachfolgenden Tabelle 1 entnommen werden.

Die Eigenschaften der erhaltenen erfindungsgemäßen Propylen-Ethylen-Copolymerisate sind in der nachfolgenden Tabelle 2 aufgeführt.

| | Beispiele und Vergleichsbeispiele | | | | | | | |
|---|---|---|---|---|---|---|---|---|
| | A | 1 | B | 2 | C | 3 | D | 4 |
| | | | | | | | | |

| Polymerisationsstufe 1 | | | | | | | | |
|---|---|---|---|---|---|---|---|---|
| Aluminiumkomponente [mmol/h] | 90 | 90 | 90 | 90 | 60 | 60 | 60 | 60 |
| Silankomponente [mmol/h] | 9 | 9 | 9 | 9 | 6 | 6 | 6 | 6 |
| Druck [bar] | 30 | 30 | 32 | 32 | 30 | 30 | 30 | 30 |
| Temperatur [°C] | 80 | 80 | 80 | 80 | 80 | 80 | 80 | 80 |
| mittlere Verweilzeit [h] | 1,4 | 1,4 | 1,4 | 1,4 | 2,0 | 2,0 | 2,0 | 2,0 |
| | | | | | | | | |

| Polymerisationsstufe 2 | | | | | | | | |
|---|---|---|---|---|---|---|---|---|
| Druck [bar] | 20 | 20 | 20 | 20 | 23 | 23 | 20 | 20 |
| Temperatur [°C] | 70 | 70 | 70 | 70 | 70 | 70 | 70 | 70 |
| Partialdruckverhältnis Propylen: Ethylen | 1,8 | 1,8 | 2,3 | 2,3 | 2,3 | 2,3 | 2,2 | 2,2 |
| Gewichtsverhältnis umgesetzte Monomere der 1. Stufe:umgesetzte Monomere der 2. Stufe | 8,6 | 8,5 | 3,8 | 3,9 | 1,7 | 1,7 | 1,1 | 1,1 |

**Tabelle 2**

| Eigenschaften der erhaltenen Copolymerisate | | | | | | | | |
|---|---|---|---|---|---|---|---|---|
| | Beispiele und Vergleichsbeispiele | | | | | | | |
| | A | 1 | B | 2 | C | 3 | D | 4 |
| nach der Polymerisationsstufel | | | | | | | | |
| Produktivität [g Polymerisat/g titanhaltige Feststoffkomponente] | 13600 | 22500 | 12000 | 19800 | 21500 | 30800 | 18700 | 26600 |
| xylollöslicher Anteil [%] | 2,3 | 1,2 | 1,9 | 1,1 | 1,7 | 1,0 | 1,8 | 1,1 |

| nach der Polymerisationsstufe2 | | | | | | | | |
|---|---|---|---|---|---|---|---|---|
| Schmelzflußindex^{a)} [g/10min] | 15,0 | 14,8 | 2,2 | 1,9 | 3,5 | 3,6 | 1,8 | 2,0 |
| Steifigkeit(G-Modul)^{b)}[N/mm²] | 873 | 942 | 523 | 581 | 350 | 418 | 273 | 315 |
| Schlagzähigkeit bei -20°C^{c)}[kJ/m²] | 19,3 | 19,5 | 0 % Bruch | 0 % Bruch | 0 % Bruch | 0 % Bruch | 0 % Bruch | 0 % Bruch |
| Kerbschlagzähigkeit bei -40°C^{d)}[kJ/m²] | | | 4,6 | 4,8 | 9,4 | 9,6 | 0 % Bruch | 0 % Bruch |

| | | | | | | | | |
|---|---|---|---|---|---|---|---|---|
| a) nach DIN 53735, bei 230°C und 21,6 kg | | | | | | | | |
| b) nach DIN 53445, | | | | | | | | |
| c) nach DIN 53453, | | | | | | | | |
| d) nach DIN 53453 | | | | | | | | |

### Beispiele 5 und 6 und Vergleichsbeispiele E und F

Das Verfahren wurde in allen Beispielen 5 und 6 und in den Vergleichsversuchen E und F in zwei hintereinander geschalteten Rührautoklaven mit einem Nutzvolumen von jeweils 180 l in Anwesenheit von Wasserstoff als Molekulargewichtsregler durchgeführt. Beide Reaktoren enthielten ein bewegtes Festbett aus feinteiligem Polypropylen.

In den ersten Polymerisationsreaktor wurden die jeweiligen Comonomere, d.h. Propylen und Ethylen gasförmig eingeleitet und bei einer mittleren Verweilzeit von 2 Stunden mit Hilfe eines Ziegler-Natta-Katalysators polymerisiert. Die genauen Versuchsbedingungen, das Verhältnis der Partialdrücke zwischen Propylen und Ethylen sowie das Gewichtsverhältnis zwischen den in der ersten und den in der zweiten Polymerisationsstufe umgesetzten Monomeren sind für die Beispiele 5 und 6 und die Vergleichsbeispiele E und F in der Tabelle in der Tabelle 3 wiedergegeben.

In den Vergleichsbeispielen E und F erfolgte die Polymerisation kontinuierlich mit Hilfe eines Ziegler-Natta-Katalysators, wobei pro Stunde 2,2 g einer titanhaltigen Feststoffkomponente, 90 mmol Triethylaluminium und 9 mmol Dimethoxyisobutylisopropylsilan als Katalysatorbestandteile verwendet werden. In den erfindungsgemäßen Beispielen 5 und 6 wurde anstelle von Dimethoxyisobutylisopropylsilan die entsprechende Menge Dimethoxydicyclopentylsilan verwendet.

Das im ersten Reaktor gebildete Propylen-Copolymerisat wurde anschließend zusammen mit dem Katalysator in den zweiten Reaktor übergeführt und dort wurde dem Copolymerisat ein Gemisch von Propylen und Ethylen in Anwesenheit von Isopropanol hinzupolymerisiert. Die genauen Versuchsbedingungen, das Verhältnis der Partialdrücke zwischen den einzelnen Comonomeren und das Mengenverhältnis zwischen Isopropanol und der Aluminiumkomponente sind für die Beispiele 5 und 6 und die Vergleichsbeispiele E und F in der Tabelle 3 wiedergegeben.

Die titanhaltige Feststoffkomponente wurde nach der gleichen Methode hergestellt wie im Vergleichsbeispiel A beschrieben.

Die Eigenschaften der in den erfindungsgemäßen Beispielen 5 und 6 und in den Vergleichsbeispielen E und F erhaltenen Propylen-Ethylen-Copolymerisate sind in der nachfolgenden Tabelle 4 wiedergegeben.

**Tabelle 3**

| - Reaktionsbedingungen - | | | | |
|---|---|---|---|---|
| | Beispiele und Vergleichsbeispiele | | | |
| | E | 5 | F | 6 |
| Polymerisationsstufe 1 | | | | |
| Druck [bar] | 25 | 25 | 28 | 28 |
| Temperatur [°C] | 80 | 80 | 70 | 70 |
| Verhältnis Partialdruck:Ethylen | 98:1 | 100:1 | 98:1 | 97:1 |
| | | | | |

| Polymerisationsstufe 2 | | | | |
|---|---|---|---|---|
| Druck [bar] | 15 | 15 | 20 | 20 |
| Temperatur [°C] | 70 | 70 | 80 | 80 |
| Verhältnis mmol Isopropanol:mmol Aluminiumkomponente | 1,2 | 1,6 | 0,3 | 0,4 |
| Verhältnis Partialdruck Propylen:Ethylen | 1,4 | 1,5 | 2,2 | 2,2 |
| Gewichtsverhältnis umgesetzte Monomere der 1.Stufe:umgesetzte Monomere der 2.Stufe | 5,0 | 4,9 | 1,3 | 1,3 |

| - Eigenschaften der erhaltenen Copolymerisate - | | | | |
|---|---|---|---|---|
| | Beispiele und Vergleichsbeispiele | | | |
| | E | 5 | F | 6 |
| nach der Polymerisationsstufe 1 | | | | |
| Produktivität [g Polymerisat/g titanhaltige Feststoffkomponente] | 20500 | 28100 | 20300 | 27900 |
| Schmelzflußindex^{a)} [g/10min] | 9,7 | 10,1 | 5,2 | 5,5 |
| xylollöslicher Anteil [%] | 3,3 | 2,5 | 5,7 | 4,3 |

| nach der Polymerisationsstufe 2 | | | | |
|---|---|---|---|---|
| Schmelzflußindex^{a)} [g/10min] | 8,1 | 8,2 | 1,6 | 1,8 |
| Steifigkeit(G-Modul)^{b)} [N/mm²] | 530 | 580 | 213 | 260 |
| Schlagzähigkeit bei -20°C^{c)} ^{[kJ/m}2^{]} | 0 % Bruch | 0 % Bruch | 0 % Bruch | 0 % Bruch |
| Kerbschlagzähigkeit bis -40°C^{d)} [kJ/m²] | 1,8 | 2,0 | 15,6 | 15,9 |

| | | | | |
|---|---|---|---|---|
| a) nach DIN 53735, bei 230°C und 2,16 kg | | | | |
| b) nach DIN 53445, | | | | |
| c) nach DIN 53453, | | | | |
| d) nach DIN 53453 | | | | |

Aus einem Vergleich zwischen den erfindungsgemäßen Beispielen 1 bis 6 und den Vergleichsbeispielen A bis F geht u.a. hervor, daß die Verwendung von Dimethoxydicyclopentylsilan anstelle von Dimethoxyisobutylisopropylsilan zu Copolymerisaten mit geringeren Gehalten an xylollöslichen Anteilen und einer erhöhten Steifigkeit führt. Dabei ist die Produktivität des eingesetzten Katalsysatorsystems deutlich erhöht.

## Patentansprüche

1. Copolymerisate des Propylens mit Alk-1-enen, erhältlich durch zweistufige Polymerisation aus der Gasphase heraus in einem bewegten Festbett, mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, wobei man
a) in der ersten Polymerisationsstufe bei einem Druck von 15 bis 40 bar, einer Temperatur von 50 bis 100°C und einer mittleren Verweilzeit des Reaktionsgemisches von 0,5 bis 5 Stunden, Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1 einstellt und anschließend
b) in einer zweiten Polymerisationsstufe bei einem Druck von 5 bis 40 bar, wobei dieser Druck wenigstens 3 bar unter dem Druck der ersten Polymerisationsstufe liegt, einer Temperatur von 30 bis 100°C und einer mittleren Verweilzeit des Reaktionsgemisches von 0,5 bis 5 Stunden, dem aus der ersten Polymerisationsstufe ausgebrachten Polymerisat Propylen und weiteres Alk-1-en in Anwesenheit von Wasserstoff hinzupolymerisiert, dabei das Verhältnis der Partialdrücke zwischen Propylen und dem des weiteren Alk-1-ens auf 0,5:1 bis 20:1 und das Gewichtsverhältnis zwischen den in der ersten und den in der zweiten Polymerisationsstufe umgesetzten Monomeren auf 0,5:1 bis 20:1 einstellt, und als siliciumorganische Verbindung eine solche der allgemeinen Formel (II) verwendet,
R¹ₙSi(OR²)₄₋ₙ (II)
wobei
R¹ eine 3- bis 8-gliedrige Cycloalkylgruppe,
R² eine C₁-C₈-Alkylgruppe bedeutet und
n für die Zahlen 1, 2 oder 3 steht.

2. Copolymerisate nach Anspruch 1, wobei als siliciumorganische Verbindung eine solche der allgemeinen Formel (II) verwendet wird, in der R¹ eine 5- bis 7-gliedrige Cycloalkylgruppe, R² eine C₁-C₄-Alkylgruppe bedeutet und n für die Zahl 2 steht.

3. Copolymerisate nach Anspruch 2, wobei als siliciumorganische Verbindung Dimethoxydicyclopentylsilan verwendet wird.

4. Copolymerisate nach einem der Ansprüche 1 bis 3, dadurch erhältlich, daß man in der ersten Polymerisationsstufe als weiteres Alk-1-en Propylen und in der zweiten Polymerisationsstufe als weiteres Alk-1-en Ethylen verwendet.

5. Copolymerisate nach einem der Ansprüche 1 bis 3, dadurch erhältlich, daß man in der ersten Polymerisationsstufe als weiteres Alk-1-en Propylen und in der zweiten Polymerisationsstufe als weiteres Alk-1-en ein Gemisch aus Ethylen und But-1-en verwendet.

6. Copolymerisate nach einem der Ansprüche 1 bis 3, dadurch erhältlich, daß man in der ersten und in der zweiten Polymerisationsstufe als weiteres Alk-1-en jeweils Ethylen verwendet.

7. Copolymerisate nach einem der Ansprüche 1 bis 3, dadurch erhältlich, daß man in der ersten Polymerisationsstufe als weiteres Alk-1-en Ethylen und in der zweiten Polymerisationsstufe als weiteres Alk-1-en ein Gemisch aus Ethylen und But-1-en verwendet.

8. Verfahren zur Herstellung von Copolymerisaten des Propylens mit Alk-1-enen,erhältlich durch zweistufige Polymerisation aus der Gasphase heraus in einem bewegten Festbett, mittels eines Ziegler-Natta-Katalysatorsystems, welches neben einer geträgerten titanhaltigen Feststoffkomponente noch als Cokatalysatoren eine Aluminiumverbindung und eine siliciumorganische Verbindung enthält, wobei man
a) in der ersten Polymerisationsstufe bei einem Druck von 15 bis 40 bar, einer Temperatur von 50 bis 100°C und einer mittleren Verweilzeit des Reaktionsgemisches von 0,5 bis 5 Stunden, Propylen zusammen mit einem weiteren Alk-1-en in Anwesenheit von Wasserstoff polymerisiert und dabei das Verhältnis zwischen dem Partialdruck des Propylens und dem des weiteren Alk-1-ens auf 10:1 bis 500:1 einstellt und anschließend
b) in einer zweiten Polymerisationsstufe bei einem Druck von 5 bis 40 bar, wobei dieser Druck wenigstens 3 bar unter dem Druck der ersten Polymerisationsstufe liegt, einer Temperatur von 30 bis 100°C und einer mittleren Verweilzeit des Reaktionsgemisches von 0,5 bis 5 Stunden, dem aus der ersten Polymerisationsstufe ausgebrachten Polymerisat Propylen und weiteres Alk-1-en in Anwesenheit von Wasserstoff hinzupolymerisiert, dabei das Verhältnis der Partialdrücke zwischen Propylen und dem des weiteren Alk-1-ens auf 0,5:1 bis 20:1 und das Gewichtsverhältnis zwischen den in der ersten und den in der zweiten Polymerisationsstufe umgesetzten Monomeren auf 0,5:1 bis 20:1 einstellt, dadurch gekennzeichnet, daß man als siliciumorganische Verbindung eine solche der allgemeinen Formel (II) verwendet
R¹ₙSi(OR²)₄₋ₙ (II)
wobei
R¹ eine 3- bis 8-gliedrige Cycloalkylgruppe,
R² eine C₁-C₈-Alkylgruppe bedeutet und
n für die Zahlen 1, 2 oder 3 steht.

9. Verfahren nach Anspruch 8, dadurch gekennzeichnet, daß man die Polymerisation in der zweiten Polymerisationsstufe in Gegenwart eines C₁-C₈-Alkanols durchführt.

10. Verfahren nach einem der Ansprüche 8 oder 9, dadurch gekennzeichnet, daß man das Gewichtsverhältnis zwischen den in der ersten und den in der zweiten Polymerisationsstufe umgesetzten Monomeren auf 1:1 bis 15:1 einstellt.

11. Verfahren nach einem der Ansprüche 8 bis 10, dadurch gekennzeichnet, daß man die mittlere Verweilzeit des Reaktionsgemisches in den beiden Polymerisationsstufen jeweils auf 0,5 bis 3,0 Stunden einstellt.

12. Copolymerisate des Propylens mit Alk-1-enen, enthaltend Copolymerisate des Propylens a) nach einem der Ansprüche 1 bis 7 und ein Nukleierungsmittel b), wobei pro 100 Gew.-Teile des Copolymerisats des Propylens a) 0,01 bis 1,5 Gew.-Teile des Nukleierungsmittels b) eingesetzt werden.

13. Verwendung der Copolymerisate des Propylens mit Alk-1-enen gemäß einem der Ansprüche 1 bis 7 als Folien, Fasern oder Formkörper.

14. Folien, Fasern oder Formkörper aus den Copolymerisaten des Propylens nach einem der Ansprüche 1 bis 7.
